# FASCICULE DE BREVET EUROPEEN

(11) **EP 3 159 522 B1**
(45) Date de publication et mention de la délivrance du brevet: **12.12.2018**
(21) Numéro de dépôt: 16191420.5
(22) Date de dépôt: 29.09.2016
(51) Int. Cl.: F02K 1/82, F02K 1/34, F02C 7/24

(54) **CONDUIT D'EJECTION DE GAZ A TRAITEMENT ACOUSTIQUE, AERONEF ET PROCEDE DE FABRICATION D'UN TEL CONDUIT**
GASAUSSTOSSLEITUNG MIT SCHALLDÄMMUNG, LUFTFAHRZEUG UND HERSTELLUNGSVERFAHREN EINER SOLCHEN LEITUNG
A GAS EJECTION DUCT WITH ACOUSTIC TREATMENT, AN AIRCRAFT, AND A METHOD OF FABRICATING SUCH A DUCT

(30) Priorité: 20.10.2015 FR 1502204
(43) Date de publication de la demande: 26.04.2017
(73) Titulaire: Airbus Helicopters, 13725 Marignane Cedex (FR)
(72) Inventeur: LOEWENSTEIN, Philippe, 13960 Sausset Les Pins (FR); HERFORT, Rémi, 13100 Aix en Provence (FR)
(74) Mandataire: GPI & Associés

(56) Documents cités:
- EP-A1- 2 868 869
- EP-A2- 1 391 597
- EP-A2- 1 998 003
- WO-A1-2015/098148
- US-A- 4 240 252
- US-A- 4 452 335

## Description

La présente invention concerne un conduit d'éjection de gaz à traitement acoustique, et un aéronef muni d'un tel conduit. De plus, l'invention concerne un procédé de fabrication d'un tel conduit.

L'invention se situe donc dans le domaine technique des conduits d'éjection de gaz des aéronefs.

Un aéronef comporte usuellement un moteur participant à la propulsion voire à la sustentation de cet aéronef. Par exemple, un giravion peut comporter un moteur thermique mettant en rotation un rotor participant au moins à la sustentation de l'aéronef.

Le moteur thermique génère des gaz d'échappement expulsés en dehors de l'aéronef par un système d'éjection. Sur un aéronef, un système d'éjection de gaz peut comprendre un conduit usuellement dénommé « tuyère » évacuant des gaz d'échappement en dehors de l'aéronef. Un moteur thermique peut aussi comporter un conduit de prélèvement de gaz dirigeant des gaz vers d'autres équipements de l'aéronef.

Les moteurs utilisés dans le domaine aéronautique peuvent produire un son pénible à entendre pour un homme. Les systèmes d'éjection de gaz sont alors parfois traités acoustiquement pour tenter de diminuer le bruit émis, en particulier dans une gamme de fréquences rendant l'audition pénible à l'oreille humaine.

Les systèmes d'éjection de gaz d'aéronef doivent en outre répondre à des exigences de tenue mécanique à l'environnement ambiant et aux exigences des organismes de régulation aéronautique officiels.

Pour réduire le bruit émis, un système mécanique peut comprendre des parois pourvues de petites cellules ouvertes localement sur l'extérieur formant des résonateurs dits de Helmholtz. De telles cellules sont dénommées « cavités » par commodité.

La résonance de Helmholtz est un phénomène physique qui apparait lorsqu'une onde acoustique se déplace à proximité d'une cavité en communication avec l'extérieur via une ouverture. L'onde acoustique originelle pénètre dans la cavité par l'ouverture, puis rebondit dans cette cavité en formant une onde déphasée, image de l'onde acoustique originelle. La superposition de l'onde acoustique originelle et de l'onde déphasée conduit à une onde résultante atténuée. Le niveau d'émissions sonores est donc diminué.

Les cavités fonctionnent donc en présence d'ondes acoustiques comme un système vibrant à un degré de liberté dont la masse est liée aux dimensions des cavités, dont la raideur est liée au volume d'air dans chaque cavité, et dont l'amortissement est lié à la résistance offerte par le milieu extérieur à la génération d'ondes acoustiques.

Sur un aéronef, une paroi munie de résonateurs exploitant ce principe comporte une âme définissant de petites cavités à sections hexagonales appliquant le principe du résonateur d'Helmholtz. Une telle cavité a alors la forme d'un cylindre à section hexagonale s'étendant en élévation d'une base ouverte vers un sommet ouvert. En raison de cette géométrie, l'âme est qualifiée de « couche de nid d'abeilles ».

Cette âme est alors brasée à une tôle arrière qui obture chaque base des cylindres. De plus, une peau perforée repose sur les sommets des cylindres afin que chaque cavité puisse communiquer par une pluralité de perforations avec les gaz éjectés.

Ainsi, un prototype d'éjection de gaz d'hélicoptère avec un traitement acoustique comporte des tôles en titane. Ces tôles sont mises en forme et soudées entre elles pour former une paroi comprenant des cavités à section hexagonale ou des cavités de grandes dimensions. La paroi comporte en outre une peau perforée accolée aux cavités.

Ce prototype d'éjection de gaz peut permettre de réaliser des cavités présentant des dimensions différentes. Dès lors, l'utilisation de cavités ayant des volumes différents permet d'atténuer un bruit sur une plus large gamme de fréquences. Néanmoins, la réalisation de cavités différentes s'avère difficilement réalisable à l'aide de tôles brasées les unes aux autres.

En outre, l'assemblage des tôles nécessite de nombreuses opérations de fabrication. En particulier, cet assemblage peut nécessiter le brasage délicat de feuilles métalliques fines.

Par suite, la réalisation d'un conduit d'éjection de gaz et notamment d'une tuyère munie d'un tel moyen de traitement acoustique peut s'avérer difficile et/ou onéreuse.

Les documents FR 2,712,640, FR 2,929,336 et EP 2,865,947 sont éloignés de la problématique de l'invention et sont cités uniquement à titre informatif.

Le document FR 2,712,640 décrit une structure ayant une surface à faible traînée aérodynamique. Cette structure comporte des cellules débouchant sur un milieu extérieur par une ouverture et sur un canal par une autre ouverture.

Le document FR 2,929,336 concerne un dispositif à jets plans utilisé pour réduire le bruit généré par un réacteur d'aéronef. Le dispositif comprend une paroi entourant un flux de gaz éjecté par un réacteur. Des conduits sont répartis à une périphérie d'une extrémité aval de la paroi pour éjecter un jet de fluide sous la forme d'une nappe.

Le document EP 2,865,947 vise un amortisseur pour réduire des pulsations acoustiques dans une chambre d'une turbine à gaz. Cet amortisseur comporte une cavité débouchant sur un tube coudé en communication avec cette chambre.

Les documents EP 1998003, US 4240252, US 4452335, WO 2015/098148 et EP 1391597 sont aussi connus.

Le document EP 2 868 869 décrit un moteur. Ce moteur inclut un conduit comprenant une paroi acoustique. Cette paroi acoustique est munie de cavités et d'ouvertures de drainage.

La présente invention a alors pour objet de proposer un conduit d'éjection de gaz à traitement acoustique présentant une structure pouvant permettre sa réalisation de manière optimisée.

Selon l'invention, un conduit d'éjection de gaz à traitement acoustique est muni d'au moins un organe mécanique, cet organe mécanique ayant au moins une paroi dite « paroi acoustique » destinée à être en contact avec ledit gaz, cette paroi acoustique comprenant une peau intérieure et une peau extérieure qui sont séparées au moins partiellement par un espace, cette paroi acoustique comprenant au moins un maillage interne agencé dans l'espace, le maillage définissant une pluralité de cavités, chaque cavité s'étendant en épaisseur de la peau intérieure à la peau extérieure, la peau intérieure étant destinée à être en contact avec les gaz , la peau intérieure comportant des perforations, chaque cavité communiquant avec au moins une perforation.

Le conduit d'éjection de gaz à traitement acoustique peut être une tuyère dirigeant les gaz vers l'extérieur de l'aéronef, ou encore une conduite de prélèvement dirigeant des gaz vers au moins un autre équipement d'un aéronef.

Chaque cavité a une forme de parallélépipède non rectangle.

Selon une variante visant à optimiser la fabrication du conduit, le conduit d'éjection de gaz à traitement acoustique s'étendant en élévation d'une base à un sommet, la peau intérieure ainsi que la peau extérieure et chaque maillage s'étendant en élévation par rapport à un plan de fabrication dit « plan horizontal tangent à la base, chaque maillage peut s'étendre en élévation selon une direction dite « direction de fabrication » présentant un angle aigu supérieur ou égal à un angle prédéterminé avec ledit plan horizontal, la peau intérieure ainsi que la peau extérieure pouvant présenter chacune une inclinaison aigüe supérieure ou égale à un angle prédéterminé avec ledit plan horizontal.

L'expression « présentant chacune une inclinaison » signifie que chaque surface de chaque organe concerné présente l'inclinaison décrite.

L'expression « en élévation » fait référence à une direction présentant un angle aigu ou nul avec la pesanteur lors de la fabrication de la paroi concernée.

Par suite, le terme « longitudinal » fait référence à une direction d'extension d'une cavité selon une direction allant de la peau intérieure à la peau extérieure. Le terme « transversal » fait référence à une direction sensiblement orthogonale à une direction en élévation et à une direction longitudinale.

Par suite, ce conduit d'éjection de gaz à traitement acoustique peut être réalisé selon l'invention en mettant en oeuvre une méthode de frittage laser, ledit conduit d'éjection de gaz à traitement acoustique étant réalisé en élévation couche par couche d'une base vers un sommet par répétition des étapes suivantes :
- dépose d'une couche de matière par un rouleau, telle qu'une poudre métallique,
- consolidation locale de ladite couche, en mettant en oeuvre un laser,
- descente d'un plateau supportant le conduit d'éjection de gaz à traitement acoustique en cours de fabrication pour déposer la couche suivante.

Lorsque le conduit d'éjection de gaz à traitement acoustique est terminé, le conduit d'éjection de gaz à traitement acoustique est sorti du dispositif de fabrication pour retirer la poudre qui l'entoure.

La technologie de l'impression en trois dimensions, et notamment du frittage d'une poudre par laser, est intéressante en raison de sa relative simplicité. Cette technologie peut permettre de réaliser des pièces relativement complexes avec des coûts de fabrication raisonnables.

Néanmoins, cette technologie n'est pas toujours facile à mettre en oeuvre.

Dès lors, une paroi acoustique d'un conduit d'éjection de gaz à traitement acoustique présente selon l'invention des résonateurs de Helmholtz prenant la forme de parallélépipèdes et non pas de nids d'abeilles. Cette forme parallélépipédique innovante autorise une fabrication en élévation du maillage et évite la mise en place de surfaces sensiblement horizontales qui sont impossibles à fabriquer avec une méthode de frittage par laser. Cette forme parallélépipédique optimise de plus la surface traitée acoustiquement en permettant l'alignement transversal et en élévation d'un nombre non limité de cavités sans perte de surface traitée.

En outre, la forme parallélépipédique peut permettre d'atténuer les ondes sonores, très pénibles à supporter par une oreille humaine, d'une fréquence proche de 5000 Hz.

De plus, les cavités d'un maillage se situent dans un plan s'étendant transversalement et en élévation qui présente un angle aigu supérieur ou égal à un angle prédéterminé avec un plan horizontal.

En effet, la demanderesse note qu'une paroi présentant un angle trop faible par rapport à un plan horizontal ne peut pas être fabriquée par frittage laser. En effet, un tel angle ne permet pas de maintenir la poudre d'une couche en appui sur la couche précédente.

Par suite, les autres éléments du conduit d'éjection de gaz à traitement acoustique et notamment la peau intérieure et la peau extérieure d'une paroi acoustique présentent aussi une inclinaison aigüe supérieure ou égale à cet angle prédéterminé.

Par ailleurs, le conduit d'éjection de gaz à traitement acoustique peut être réalisé par frittage laser avec un matériau métallique résistant.

En outre, la fabrication d'un objet par frittage laser nécessite d'évacuer des résidus de poudre ce qui pose problème en présence de cavités. Les perforations de la peau intérieure peuvent néanmoins participer à l'évacuation des résidus de poudre ayant servies à la fabrication, mais aussi au drainage du conduit d'éjection de gaz à traitement acoustique.

Par suite, le conduit d'éjection de gaz à traitement acoustique peut répondre à des exigences acoustiques en raison de la présence de cavités innovantes, à des exigences d'organismes de régulation (drainage, tenue mécanique...), à des exigences nécessaires pour la tenue mécanique du conduit d'éjection de gaz à traitement acoustique à des conditions environnementales (température, pression...) et enfin à des exigences de conception pour le frittage laser de poudre métallique (épaisseurs de peau, angles par rapport à la verticale...).

Le conduit d'éjection de gaz à traitement acoustique peut aussi comporter une ou plusieurs des caractéristiques qui suivent.

Ainsi, l'angle prédéterminé est éventuellement égal à 45 degrés.

En outre, chaque tangente à une desdites peaux qui est agencée dans un plan perpendiculaire audit plan horizontal présente une dite inclinaison.

Par suite, chaque surface des parois présente l'inclinaison requise.

Par ailleurs, lesdites cavités d'un maillage sont par exemple agencées en élévation les unes au dessus des autres, et transversalement les unes à côté des autres.

Le maillage prend la forme d'un plan ayant pour épaisseur l'épaisseur des cavités selon une direction longitudinale. Cet agencement permet de réaliser aisément le maillage par frittage laser.

En outre, chaque cavité est délimitée en élévation par une cloison dite « cloison supérieure » et une cloison dite « cloison inférieure », chaque cavité étant délimitée transversalement par une cloison dite « cloison latérale gauche » et une cloison dite « cloison latérale droite » qui s'étendent chacune en élévation de la cloison inférieure à la cloison supérieure, chaque cavité étant délimitée en épaisseur transversalement par une portion non perforée de la peau extérieure et un portion perforée de la peau intérieure.

Chaque cavité est alors délimitée par six faces, à savoir une cloison supérieure sensiblement parallèle à une cloison inférieure, une cloison latérale gauche sensiblement parallèle à une cloison latérale droite, et une portion non perforée avant de la peau extérieure sensiblement parallèle à une portion perforée arrière de la peau intérieure.

Chacune desdites cloisons est éventuellement rectangulaire.

Par ailleurs, chaque cavité a une forme de parallélépipède non rectangle, la cloison inférieure et la cloison supérieure présentant chacune une angulation différente de 90 degrés avec la cloison latérale gauche ou la cloison latérale droite.

Par contre et à l'instar des maillages ainsi que des peaux intérieure et extérieure, chaque cloison présente une angulation comprise entre 45 degrés inclus et 90 degrés inclus avec un plan horizontal.

En outre, au moins une dite cloison d'une cavité présente une ouverture de drainage débouchant en dehors de cette cavité.

Le conduit d'éjection de gaz à traitement acoustique contient ainsi des ouvertures permettant le drainage de ce conduit d'éjection de gaz à traitement acoustique.

En particulier, chaque cavité peut communiquer avec chaque cavité adjacente transversalement par une ouverture pour permettre l'échappement de la poudre après fabrication. Deux cavités adjacentes transversalement partagent donc une cloison latérale commune, la cloison latérale gauche d'une cavité représentant la cloison latérale droite de l'autre cavité. Cette cloison latérale peut alors présenter une ouverture de drainage.

Cette caractéristique n'est pas évidente dans le contexte de l'application du principe de Helmholtz. Toutefois, la demanderesse note qu'une cloison latérale munie d'une ouverture limitée permet néanmoins d'obtenir une cavité acoustiquement performante.

De même, le conduit d'éjection de gaz à traitement acoustique peut comporter au moins une peau munie d'au moins un orifice de drainage débouchant sur l'extérieur du conduit d'éjection de gaz à traitement acoustique.

Le conduit d'éjection de gaz à traitement acoustique contient alors des trous internes de type orifices de drainage permettant le drainage. Par exemple, l'espace présent entre une peau intérieure et une peau extérieure débouche sur au moins un orifice de drainage ménagé dans la peau intérieure ou la peau extérieure.

En outre, la paroi acoustique peut être réalisée à partir de divers matériaux, et en particulier à partir des matériaux compatibles avec la méthode de frittage laser connue sous l'acronyme ALM et l'expression anglaise « Additive Layer manufacturing ».

Le titane 6242 parait être envisageable.

De même, la paroi acoustique peut être réalisée à partir du matériau NiCr19Fe19Nb5Mo3.

Ce matériau correspond au matériau connu sous la marque inconel 718. Le matériau utilisé pour fabriquer le conduit d'éjection de gaz à traitement acoustique peut ainsi être de la poudre d'inconel 718 qui permet de répondre aux exigences de tenue mécanique dans l'environnement extérieur au conduit d'éjection de gaz à traitement acoustique avec des épaisseurs faibles.

Ainsi, au moins une desdites peaux intérieure et extérieure peut présenter une épaisseur inférieure à un millimètre.

Le terme épaisseur représente la plus petite dimension d'une peau.

Par ailleurs, chaque perforation peut présenter un diamètre inférieur ou égal à quatre millimètres et de l'ordre du millimètre.

De même, les ouvertures et orifices décrits précédemment présentent éventuellement un diamètre inférieur ou égal à quatre millimètres.

La demanderesse note que la réalisation d'un trou dans un plan s'étendant en élévation avec des diamètres supérieurs à quatre millimètres s'avère difficile voire impossible.

Par suite, chaque cavité communique éventuellement avec au moins quatre perforations d'un diamètre maximal de 1.5 millimètre.

Les cavités sont recouvertes d'une peau intérieure perforée comportant des perforations de 1.5 millimètre de diamètre pour permettre un phénomène de résonance de Helmholtz à une fréquence calculée de 5000 Hz. Cette fréquence est déterminée à partir du volume des cavités, de la vitesse du son, du nombre ainsi que du diamètre et de la profondeur des perforations.

En outre, le conduit d'éjection de gaz à traitement acoustique pouvant être une tuyère, chaque organe mécanique est à choisir dans une liste comprenant une jupe, un cône central, et un bras reliant ladite jupe au cône central.

Par exemple, le conduit d'éjection de gaz à traitement acoustique est réalisé sur la base de la tuyère de l'hélicoptère Tigre® en incorporant des parois acoustiques selon l'invention dans la jupe, le cône central et les bras de la tuyère.

Par ailleurs, l'invention vise un aéronef muni d'un conduit d'éjection de gaz à traitement acoustique du type décrit précédemment.

L'invention et ses avantages apparaîtront avec plus de détails dans le cadre de la description qui suit avec des exemples donnés à titre illustratif en référence aux figures annexées qui représentent :
- la figure 1, une vue présentant un aéronef selon l'invention,
- la figure 2, une vue en trois dimensions d'un conduit d'éjection de gaz à traitement acoustique de type tuyère d'éjection de gaz à traitement acoustique,
- la figure 3, une vue d'une portion d'une paroi acoustique,
- la figure 4, une vue explicitant l'inclinaison et l'angle autorisés pour les peaux intérieure et extérieure ainsi que pour le maillage,
- la figure 5, une vue éclatée d'une portion d'une paroi acoustique permettant de visualiser des cavités,
- la figure 6, une vue d'une jupe d'un conduit d'éjection de gaz à traitement acoustique de type tuyère d'éjection de gaz à traitement acoustique selon l'invention,
- la figure 7, une vue d'un bras d'un conduit d'éjection de gaz à traitement acoustique de type tuyère d'éjection de gaz à traitement acoustique,
- les figures 8 et 9, une vue d'un cône central d'un conduit d'éjection de gaz à traitement acoustique de type tuyère d'éjection de gaz à traitement acoustique,
- la figure 10, une vue d'un conduit d'éjection de gaz à traitement acoustique de type conduit de prélèvement de gaz, et
- la figure 11, une vue d'un dispositif de fabrication illustrant la procédé selon l'invention.

Les éléments présents dans plusieurs figures distinctes sont affectés d'une seule et même référence.

On note que trois directions X, Y et Z orthogonales les unes par rapport aux autres sont représentées sur certaines figures.

La direction X est dite longitudinale. Une autre direction Y est dite transversale. Enfin, une troisième direction Z est dite d'élévation et correspond aux dimensions en hauteur des structures décrites.

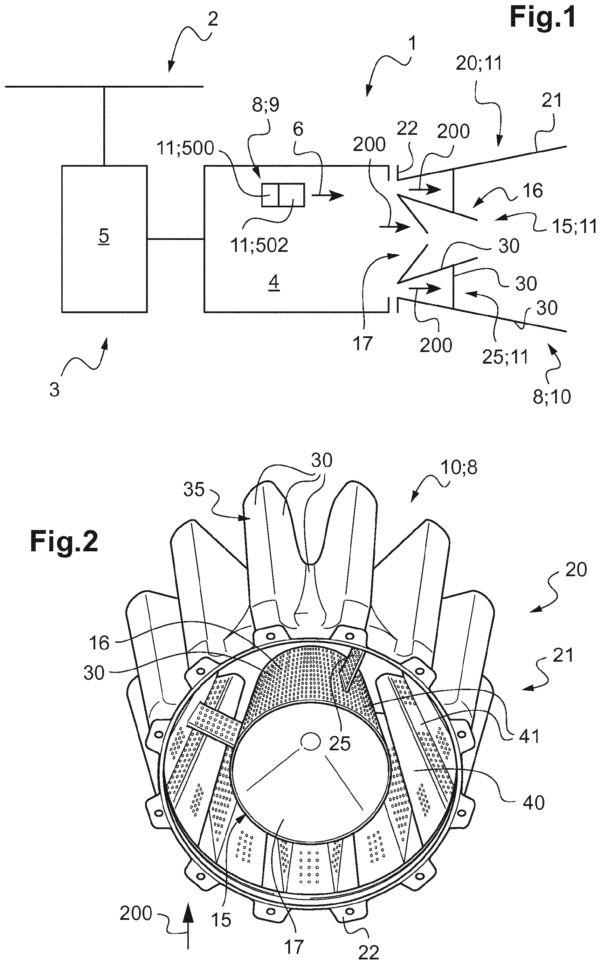

La figure 1 présente un aéronef 1 selon l'invention.

Cet aéronef 1 est pourvu d'une installation motrice 3 comprenant au moins un moteur 4. Par exemple, le moteur 4 met en mouvement un rotor 2 participant au moins à la sustentation de l'aéronef via une boîte de transmission de puissance 5. Le moteur 4 peut être un moteur thermique éjectant des gaz 200, tel qu'un moteur à pistons ou un turbomoteur.

Pour évacuer des gaz à partir du moteur, l'aéronef 1 est muni d'un conduit d'éjection de gaz à traitement acoustique 8.

Un tel conduit d'éjection de gaz à traitement acoustique 8 peut être une tuyère d'éjection de gaz à traitement acoustique 10 dirigeant les gaz vers l'extérieur de l'aéronef, par exemple en aval d'une turbine de détente d'un turbomoteur.

En outre, un conduit d'éjection de gaz à traitement acoustique 8 peut prendre la forme d'un conduit prélevant un gaz à partir du moteur 4 pour diriger ces gaz vers au moins un autre équipement 6 de l'aéronef, tel qu'un système de climatisation par exemple. Par exemple, les gaz sont prélevés à partir d'un générateur de gaz d'un turbomoteur.

Le conduit d'éjection de gaz à traitement acoustique 8 comprend au moins un organe mécanique 11. Cet organe mécanique 11 est traité acoustiquement pour réduire l'émission de bruit lors de l'échappement de gaz 200.

Par exemple, le conduit de prélèvement 9 comporte un coude 500 suivi d'un diffuseur 502.

En outre, la tuyère d'éjection de gaz à traitement acoustique 10 est par exemple munie d'une jupe 20. La jupe 20 est pourvue d'un organe divergent 21 solidaire d'une collerette 22. La collerette est vissée au moteur 4 par exemple. Un tel organe divergent 21 peut alors représenter un organe mécanique 11 traité acoustiquement.

La tuyère d'éjection de gaz à traitement acoustique 10 est aussi munie d'un cône central 15 qui peut représenter un organe mécanique 11 traité acoustiquement. Ce cône central comprend par exemple un organe convergent extérieur 16 qui entoure un organe convergent intérieur 17. L'organe convergent intérieur est alors relié à la base de l'organe convergent extérieur 16.

En outre, la tuyère d'éjection de gaz à traitement acoustique 10 est aussi munie d'une pluralité de bras 25 reliant chacun l'organe convergent extérieur 16 du cône central 15 à l'organe divergent 21 de la jupe 20. Au moins un bras 25 s'étend par exemple radialement et peut représenter un organe mécanique 11 traité acoustiquement.

La figure 2 présente une vue en trois dimensions d'un conduit d'éjection de gaz à traitement acoustique 8 de type tuyère d'éjection de gaz à traitement acoustique 10 selon l'invention.

Indépendamment de la nature du conduit d'éjection de gaz à traitement acoustique 8, chaque organe mécanique traité acoustiquement présente une paroi acoustique 30 innovante. Une telle paroi acoustique 30 comporte une peau extérieure 35 et une peau intérieure 40, la peau intérieure 40 étant nécessairement en regard d'un passage 201 qui est traversé par les gaz 200. Cette peau intérieure 40 présente alors des perforations 41 destinées à être traversées par une onde acoustique générée par la circulation des gaz 200.

Le conduit d'éjection de gaz à traitement acoustique 8 et en particulier la paroi acoustique 30 peut être réalisé à partir du matériau NiCr19Fe19Nb5Mo3. D'autres matériaux sont envisageables

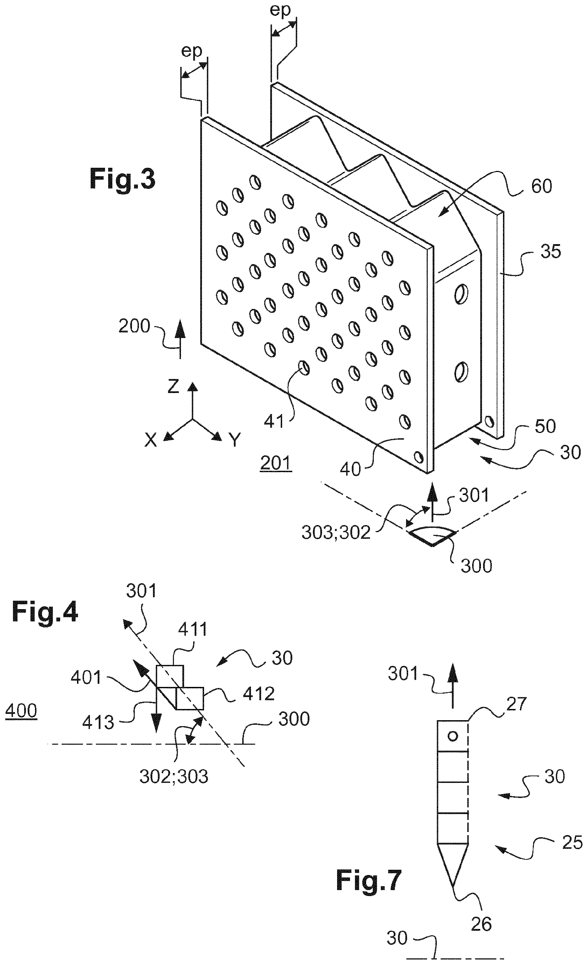

La figure 3 présente une vue en trois dimensions d'une paroi acoustique 30.

Comme indiqué précédemment, la paroi acoustique 30 présente une peau extérieure 35 et une peau intérieure 40.

La peau extérieure 35 et la peau intérieure 40 peuvent former localement une seule même peau.

Néanmoins, la peau extérieure 35 et la peau intérieure 40 sont aussi séparées au moins localement par un espace 50 interne. Dès lors, un maillage 60 est agencé dans cet espace 50.

Ce maillage 60 définit des cavités non visibles sur la figure 3 qui représentent chacune un résonateur de Helmholtz. Dès lors, chaque cavité communique avec un passage 201 traversé par les gaz par des perforations 41.

Pour permettre la fabrication du conduit d'éjection de gaz à traitement acoustique 8 de bas en haut par frittage laser, le maillage 60 d'une paroi acoustique s'étend en élévation selon une direction dite « direction de fabrication 301 ». Cette direction de fabrication 301 présente un angle aigu 302 supérieur ou égal à un angle prédéterminé avec un plan horizontal 300. Ce plan horizontal représente le plan sur lequel est déposée la première couche de poudre lors de la fabrication.

De même, la peau intérieure 40 ainsi que la peau extérieure 35 présentent chacune une inclinaison aigüe 303 supérieure ou égale à cet angle prédéterminé avec le plan horizontal 300.

De manière générale et en référence à la figure 4, toute surface du conduit d'éjection de gaz à traitement acoustique 8 s'étend de bas en haut selon une direction présentant au moins ledit angle prédéterminé avec le plan horizontal 300.

En effet, lorsqu'une couche de poudre dite «couche supérieure 411 » est déposée sur une couche dite «couche inférieure 412 », la couche supérieure 411 risque de s'effondrer sous son propre poids selon la flèche 413. Toutefois, la demanderesse note qu'à partir d'un angle prédéterminé, la couche supérieure 411 peut demeurer sur la couche inférieure 412.

Un tel angle prédéterminé est par exemple égal à 45 degrés.

Dès lors, chacune des peaux extérieure 35 et intérieure 40 comporte une tangente 401 agencée dans un plan perpendiculaire 400 au plan horizontal 300. Cette tangente 401 présente alors une inclinaison 303 par rapport au plan horizontal 300 supérieure ou égale à l'angle prédéterminé.

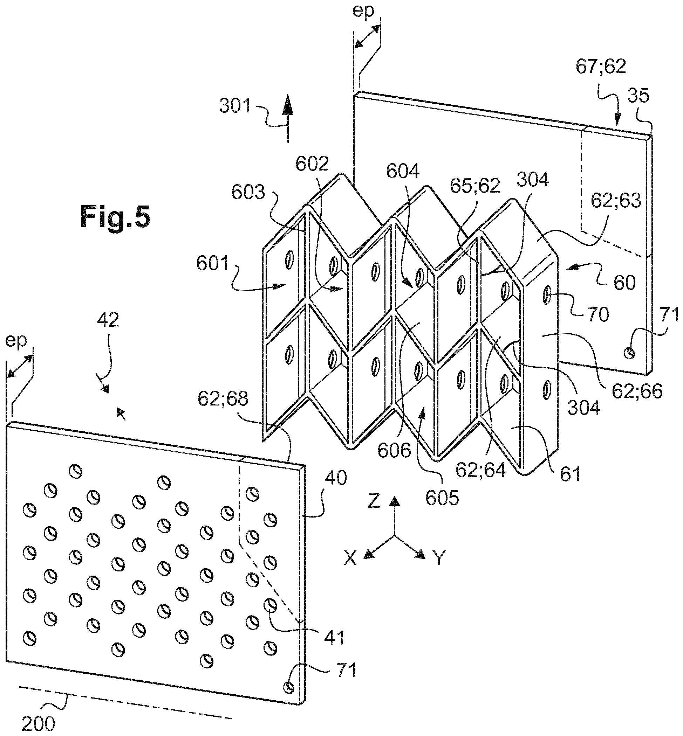

La figure 5 montre une vue éclatée d'une paroi acoustique 30 permettant de visualiser le maillage 60 interne.

Ce maillage 60 présente donc une pluralité de cavités 61 qui s'étendent transversalement de la peau extérieure 35 vers la peau intérieure 40.

Chaque cavité 61 est délimitée par six faces sensiblement planes.

Ainsi, une cavité est délimitée en élévation selon une direction en élévation Z d'une part par une cloison 62 dite « cloison supérieure 63 » et, d'autre part par une cloison 62 dite « cloison inférieure 64 ». La cloison supérieure 63 est parallèle à la cloison inférieure 64.

De plus, la cavité 61 est délimitée transversalement selon une direction transversale Y d'une part par une cloison 62 dite « cloison latérale gauche 65 » et, d'autre part, par une cloison 62 dite « cloison latérale droite 66 ». La cloison latérale gauche 65 est parallèle à la cloison latérale droite 66. En outre, la cloison latérale gauche 65 et la cloison latérale droite 66 s'étendent chacune en élévation de bas en haut, selon la direction de fabrication de la paroi, de la cloison inférieure 64 à la cloison supérieure 63.

Enfin, chaque cavité 61 est délimitée en épaisseur longitudinalement selon une direction longitudinale X d'une part par une face plane représentée par une portion non perforée 67 de la peau extérieure 35 et, d'autre part par une face plane représentée par une portion perforée 68 de la peau intérieure 40.

Chaque cavité a alors par construction une forme parallélépipédique innovante.

En particulier, chaque cloison peut être rectangulaire.

Toutefois, chaque cavité 61a une forme de parallélépipède non rectangle. La cloison inférieure 64 et la cloison supérieure 63 présentent chacune une angulation aigue 304 différente de 90 degrés avec la cloison latérale gauche 65 ou la cloison latérale droite 66.

En outre, les cavités 61 d'un maillage 60 sont disposées en élévation les unes au dessus des autres, et transversalement les unes à côté des autres.

Par suite, deux cavités 601, 602 adjacentes transversalement possèdent une cloison latérale 603 commune.

De même, deux cavités adjacentes en élévation sont agencées l'une au dessus de l'autre. Une cavité dite « cavité du dessus 604 » surplombe alors une cavité dite « cavité du dessous 605 ». Dès lors, deux cavités adjacentes possèdent une cloison commune 606 qui représente une cloison supérieure pour la cavité du dessous 605 et une cloison inférieure pour la cavité du dessus 604.

En outre, la cloison latérale gauche de la cavité du dessus est située dans l'alignement de la cloison latérale gauche de la cavité du dessous, et la cloison latérale droite de la cavité du dessus est située dans l'alignement de la cloison latérale droite de la cavité du dessous. Des cloisons latérales d'un rang de cavités agencées les unes au dessus des autres forment ainsi une plaque plane s'étendant en élévation.

Par ailleurs, chaque cavité a par construction une forme parallélépipédique innovante.

Pour permettre l'évacuation de résidus d'une poudre lors de la fabrication de la paroi acoustique, au moins une cloison 62 d'une cavité 61 présente une ouverture de drainage 70 débouchant en dehors de cette cavité 61.

Par exemple, chaque cloison latérale 65, 66 présente une ouverture de drainage 70. Cette ouverture de drainage 70 débouche alors soit sur une autre cavité soit sur une partie de l'espace 50 qui n'est pas remplie par un maillage.

De même, au moins une peau peut être munie d'au moins un orifice de drainage 71. De préférence, la peau extérieure d'une paroi acoustique est munie d'au moins un orifice de drainage, cette peau extérieure n'étant pas en contact avec l'onde acoustique.

Par ailleurs, toutes les lumières réalisées dans le conduit d'éjection de gaz à traitement acoustique 8 peuvent être précisément dimensionnées. Ces lumières incluent les perforations, les ouvertures, et les orifices décrits précédemment.

Ainsi, chaque perforation 41, voire chaque ouverture de drainage et chaque orifice de drainage présente un diamètre 42 inférieur ou égal à quatre millimètres.

En effet, la demanderesse note qu'un diamètre plus important peut induire l'affaissement indu d'une couche de poudre lors d'une fabrication par frittage laser.

Dès lors, chaque cavité peut communiquer fluidiquement avec un passage 201 qui est traversé par les gaz au travers de quatre perforations d'un diamètre inférieur ou égal à 1.5 millimètre.

Par ailleurs, les peaux intérieure 40 et extérieure 35 peuvent présenter des épaisseurs faibles pouvant néanmoins être obtenues par frittage laser. Dès lors, au moins une des peaux intérieure 40 et extérieure 35 présente éventuellement une épaisseur ep inférieure à un millimètre.

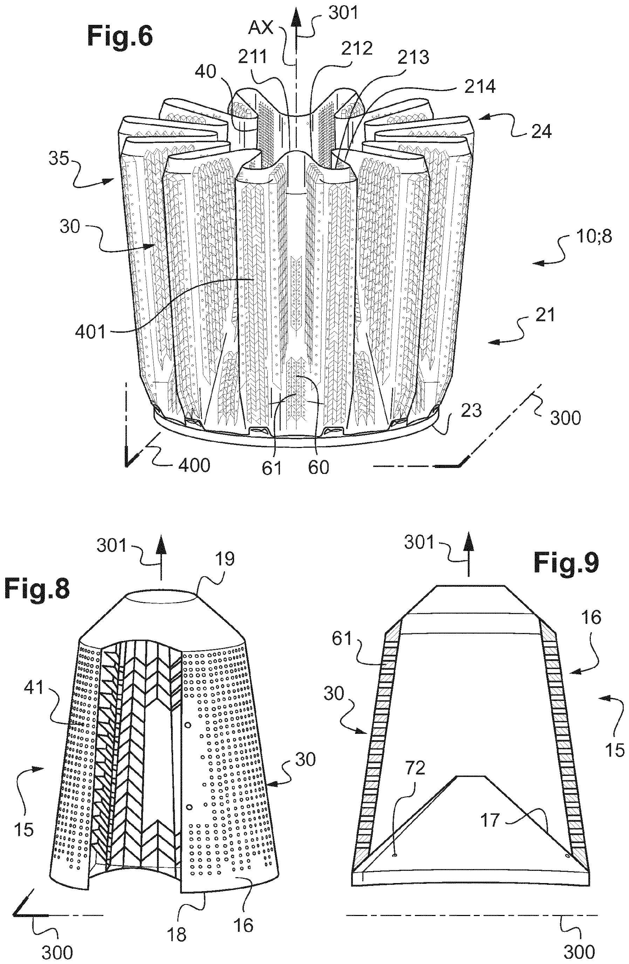

Les figures 6 à 9 illustrent une tuyère d'éjection de gaz à traitement acoustique selon l'invention munie d'une jupe, d'un cône central et de bras.

En référence à la figure 6, la jupe 20 peut comprendre une pluralité de maillages 60 s'étendant selon une direction de fabrication et de bas en haut d'une base 23 vers un sommet 24.

L'organe divergent 21 de la jupe s'étend selon une direction de fabrication et de bas en haut d'une base 23 vers un sommet 24. Cet organe divergent 21 peut avoir entre la base 23 et son sommet 24 une forme périodique formant des plis. Cette forme périodique comporte un tronçon répété de multiples fois, ce tronçon comprenant successivement une arche interne 211, un premier côté 212, une arche externe 213 et un deuxième côté 214. L'arche interne 211 présente une face convexe au regard d'un axe de symétrie AX de l'organe divergent 21, alors que l'arche externe 213 présente une face concave au regard de cet axe de symétrie AX. Dès lors, le premier côté 212 s'éloigne de l'axe de symétrie AX en s'étendant de l'arche interne 211 vers l'arche externe 213, alors que le deuxième côté 214 se rapproche de l'axe de symétrie AX en s'étendant à partir de l'arche externe 213.

Dès lors, au moins maillage 60 peut être disposé au niveau de l'arche interne 211, du premier côté 212, de l'arche externe 213 et du deuxième côté 214.

De plus, la figure 6 illustre la possibilité de fusionner localement la peau extérieure et la peau intérieure, en particulier à la base 23 et/ou au sommet 24 de l'organe divergent 21.

La figure 7 illustre un bras 25 de la tuyère d'éjection de gaz à traitement acoustique 10. Ce bras s'étend de bas en haut selon une direction de fabrication d'un pied 26 vers une extrémité 27, le pied 26 et l'extrémité 27 pouvant être solidarisés au cône central 15 et à la jupe 20 de la tuyère d'éjection de gaz à traitement acoustique 10.

Le bras peut alors comporter une paroi acoustique 30 du type décrit précédemment.

Les figures 8 et 9 illustrent un cône central 15.

En référence à la figure 9, l'organe convergent extérieur 16 peut comporter une paroi acoustique annulaire 30 selon l'invention.

L'organe convergent intérieur 17 peut éventuellement uniquement une peau formant un cône ouvert à son sommet. Cette peau présente l'inclinaison requise par rapport au plan horizontal 300, voire au moins un orifice de drainage 72.

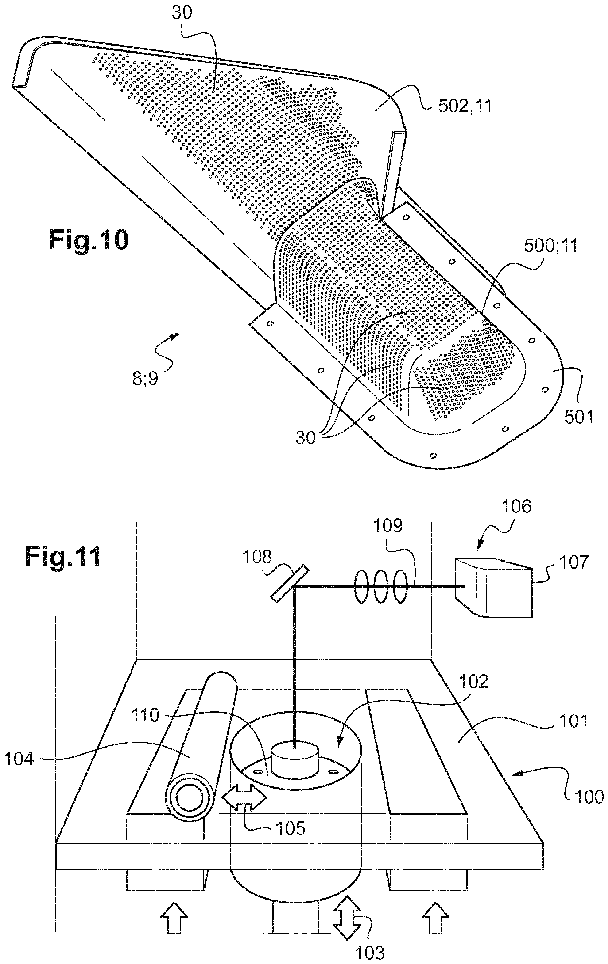

La figure 10 illustre un conduit de prélèvement 9 selon l'invention. Ce conduit de prélèvement 9 comporte un coude 500 suivi d'un diffuseur 502. Le coude 500 et/ou le diffuseur 502 peuvent comprendre des parois acoustiques 30 du type décrit précédemment.

Eventuellement, le coude 500 et/ou le diffuseur 502 sont fixés à une collerette de fixation 501.

La figure 11 illustre un dispositif de fabrication 100 par frittage laser permettant de mettre en oeuvre le procédé selon l'invention.

Ce dispositif de fabrication 100 comporte une table 101 ou équivalent. Cette table 101 délimite un bac 102. Le bac 102 est ouvert à son sommet mais présente un fond mobile. Ce fond mobile est obtenu à l'aide d'un plateau 110 mobile en élévation selon la double flèche 103.

De plus, le dispositif de fabrication 100 comporte un rouleau 104 roulant sur la table 101 selon la double flèche 105. Ce rouleau 104 permet de déposer des couches successives de poudre dans le bac 102.

Par ailleurs, le dispositif de fabrication 100 comporte un système laser 106 apte à solidifier la poudre déposée dans le bac dans des zones prédéterminées. Ce système laser 106 possède alors un émetteur laser 107 émettant un faisceau laser. De plus, le système laser 106 possède un système optique 108 apte à diriger le faisceau laser dans les zones requises.

Le dispositif de fabrication 100 possède en outre un système électronique non représenté permettant de contrôler le plateau 110, le rouleau 104 et le système laser 106.

Selon le procédé de l'invention, le conduit d'éjection de gaz à traitement acoustique 8 est réalisé couche par couche par répétition des étapes suivantes :
- dépose d'une couche de matière par le rouleau 104 dans le bac 102,
- consolidation locale de la couche par le système laser,
- descente du plateau 110 supportant le conduit de gaz à traitement acoustique 10 en cours de fabrication pour déposer la couche suivante.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Conduit d'éjection de gaz à traitement acoustique (8) muni d'au moins un organe mécanique (11), ledit organe mécanique (11) ayant au moins une paroi dite « paroi acoustique (30) » destinée à être en contact avec ledit gaz (200), ladite paroi acoustique (30) comprenant une peau intérieure (40) et une peau extérieure (35) qui sont séparées au moins partiellement par un espace (50), ladite paroi acoustique (30) comprenant au moins un maillage (60) interne agencé dans ledit espace (50), ledit maillage (60) définissant une pluralité de cavités (61), chaque cavité (61) s'étendant en épaisseur de la peau intérieure (40) à la peau extérieure (35), ladite peau intérieure (40) étant destinée à être en contact avec ledit gaz (200), ladite peau intérieure (40) comportant des perforations (41), chaque cavité (61) communiquant avec au moins une perforation (41), chaque cavité (61) ayant une forme parallélépipédique, chaque cavité (61) étant délimitée en élévation par une cloison (62) dite « cloison supérieure (63) » et une cloison (62) dite « cloison inférieure (64) », chaque cavité (61) étant délimitée transversalement par une cloison (62) dite « cloison latérale gauche (65) » et une cloison (62) dite « cloison latérale droite (66) » qui s'étendent chacune en élévation de la cloison inférieure (64) à la cloison supérieure (63), chaque cavité (61) étant délimitée en épaisseur transversalement par une portion non perforée (67) de la peau extérieure (35) et une portion perforée (68) de la peau intérieure (40), au moins une dite cloison (62) d'une cavité (61) présentant une ouverture de drainage (70) débouchant en dehors de cette cavité (61),
**caractérisé en ce que** chaque cavité (61) a une forme de parallélépipède non rectangle, la cloison inférieure (64) et la cloison supérieure (63) présentant chacune une angulation aigue (304) différente de 90 degrés avec la cloison latérale gauche (65) ou la cloison latérale droite (66).

2. Conduit d'éjection de gaz à traitement acoustique selon la revendication 1,
**caractérisé en ce que** ledit conduit d'éjection de gaz à traitement acoustique (8) s'étendant en élévation d'une base (23) à un sommet (24), la peau intérieure (40) ainsi que la peau extérieure (35) et chaque maillage (60) s'étendant en élévation par rapport à un plan de fabrication dit « plan horizontal (300) » tangent à la base (23), chaque maillage (60) s'étendant en élévation selon une direction dite « direction de fabrication (301) » présentant un angle aigu (302) supérieur ou égal à un angle prédéterminé avec ledit plan horizontal (300), la peau intérieure (40) ainsi que la peau extérieure (35) présente chacune une inclinaison aigüe (303) supérieure ou égale audit angle prédéterminé avec ledit plan horizontal (300).

3. Conduit d'éjection de gaz à traitement acoustique selon la revendication 2,
**caractérisé en ce que** ledit angle prédéterminé est égal à 45 degrés.

4. Conduit d'éjection de gaz à traitement acoustique selon l'une quelconque des revendications 2 à 3,
**caractérisé en ce que** chaque tangente (401) à une desdites peaux (35, 40) qui est agencée dans un plan perpendiculaire (400) audit plan horizontal (300) présente une dite inclinaison (303).

5. Conduit d'éjection de gaz à traitement acoustique selon l'une quelconque des revendications 1 à 4,
**caractérisé en ce que** lesdites cavités (61) d'un maillage (60) sont agencées en élévation (Z) les unes au dessus des autres, et transversalement (Y) les unes à côté des autres.

6. Conduit d'éjection de gaz à traitement acoustique selon l'une quelconque des revendications 1 à 5,
**caractérisé en ce que** chacune desdites cloisons (62) est rectangulaire.

7. Conduit d'éjection de gaz à traitement acoustique selon l'une quelconque des revendications 1 à 6,
**caractérisé en ce que** ladite paroi acoustique (30) est réalisée à partir du matériau NiCr19Fe19Nb5Mo3.

8. Conduit d'éjection de gaz à traitement acoustique selon l'une quelconque des revendications 1 à 7,
**caractérisé en ce qu'**au moins une desdites peaux intérieure (40) et extérieure (35) présente une épaisseur (ep) inférieure à un millimètre.

9. Conduit d'éjection de gaz à traitement acoustique selon l'une quelconque des revendications 1 à 8,
**caractérisé en ce que** chaque perforation (41) présente un diamètre (42) inférieur ou égal à quatre millimètres.

10. Conduit d'éjection de gaz à traitement acoustique selon l'une quelconque des revendications 1 à 9,
**caractérisé en ce que** chaque cavité (61) communique avec au moins quatre perforations (41) d'un diamètre (42) maximal de 1.5 millimètres.

11. Conduit d'éjection de gaz à traitement acoustique selon l'une quelconque des revendications 1 à 10,
**caractérisée en ce que**, ledit conduit d'éjection de gaz à traitement acoustique (8) étant une tuyère (10), chaque organe mécanique (11) est à choisir dans une liste comprenant une jupe (20), un cône central (15), et un bras (25) reliant ladite jupe (20) au cône central (15).

12. Conduit d'éjection de gaz à traitement acoustique selon l'une quelconque des revendications 1 à 11,
**caractérisé en ce que** ledit conduit d'éjection de gaz à traitement acoustique (10) comporte au moins une peau munie d'au moins un orifice de drainage (71).

13. Aéronef (1) muni d'un conduit d'éjection de gaz à traitement acoustique (8),
**caractérisée en ce que** ledit conduit d'éjection de gaz à traitement acoustique (8) est selon l'une quelconque des revendications 1 à 12.

14. Procédé de fabrication d'un conduit d'éjection de gaz à traitement acoustique (8) selon l'une quelconque des revendications 1 à 12,
au cours duquel, ledit conduit d'éjection de gaz à traitement acoustique (8) est réalisé en mettant en oeuvre une méthode de frittage laser, ledit conduit d'éjection de gaz à traitement acoustique (8) étant réalisé couche par couche par répétition des étapes suivantes :
- dépose d'une couche de matière par un rouleau (104),
- consolidation locale de ladite couche,
- descente d'un plateau (110) supportant le conduit d'éjection de gaz à traitement acoustique (8) en cours de fabrication.

## Patentansprüche

1. Gasausstoßkanal (8) mit akustischer Behandlung, der mit mindestens einem mechanischen Element (11) versehen ist, wobei das mechanische Element (11) mindestens eine als "akustische Wand (30)" bezeichnete Wand aufweist, die vorgesehen ist, um mit dem Gas (200) in Kontakt zu stehen, wobei die akustische Wand (30) eine Innenhaut (40) und eine Außenhaut (35) umfasst, die zumindest teilweise durch einen Zwischenraum (50) getrennt sind,
wobei die akustische Wand (30) mindestens ein inneres Gitter (60) umfasst, das in dem Zwischenraum (50) angeordnet ist, wobei das Gitter (60) eine Vielzahl von Hohlräumen (61) definiert, wobei sich jeder Hohlraum (61) in der Dicke von der Innenhaut (40) bis zur Außenhaut (35) erstreckt, wobei die Innenhaut (40) vorgesehen ist, um mit dem Gas (200) in Kontakt zu stehen, wobei die Innenhaut (40) Durchbrüche (41) aufweist, wobei jeder Hohlraum (61) mit mindestens einem Durchbruch (41) kommuniziert, jeder Hohlraum (61) eine parallelepipedförmige Gestalt aufweist, wobei jeder Hohlraum (61) in der Höhe durch eine als "obere Trennwand (63)" bezeichnete Trennwand (62) und eine als "untere Trennwand (64)" bezeichnete Trennwand (62) begrenzt ist, wobei jeder Hohlraum (61) quer durch eine als "linke seitliche Trennwand (65)" bezeichnete Trennwand (62) und eine als "rechte seitliche Trennwand (66)" bezeichnete Trennwand (62) begrenzt ist, die sich jeweils in der Höhe von der unteren Trennwand (64) zur oberen Trennwand (63) erstrecken, wobei jeder Hohlraum (61) in seiner Dicke quer durch einen nicht durchbrochenen Abschnitt (67) der Außenhaut (35) und einen durchbrochenen Abschnitt (68) der Innenhaut (40) begrenzt ist, wobei mindestens eine der Trennwände (62) eines Hohlraums (61) eine Entwässerungsöffnung (70) aufweist, die aus diesem Hohlraum (61) herausführt,
**dadurch gekennzeichnet, dass** jeder Hohlraum (61) eine nicht-rechteckige parallelepipedförmige Gestalt aufweist, wobei die untere Trennwand (64) und die obere Trennwand (63) jeweils mit der linken Trennwand (65) oder der rechten Trennwand (66) einen spitzen Winkel bilden, der sich von 90 Grad unterscheidet.

2. Gasausstoßkanal mit akustischer Behandlung nach Anspruch 1, **dadurch gekennzeichnet, dass** der Gasausstoßkanal (8) mit akustischer Behandlung sich in der Höhe von einer Basis (23) zu einem Scheitel (24) erstreckt, dass sich die Innenhaut (40) sowie die Außenhaut (35) und jedes Gitter (60) in Bezug auf eine als "horizontale Ebene (300)" bezeichnete, zur Basis (23) tangentiale Herstellungsebene in der Höhe erstrecken, jedes Gitter (60) sich in der Höhe in einer als "Herstellungsrichtung (301)" bezeichneten Richtung erstreckt, die mit der horizontalen Ebene (300) einen spitzen Winkel (302) bildet, der größer oder gleich einem vorbestimmten Winkel ist, und dass die innere Haut (40) und die äußere Haut (35) jeweils eine spitze Neigung (303) gegenüber der horizontalen Ebene (300) aufweisen, die größer oder gleich dem vorbestimmten Winkel ist.

3. Gasausstoßkanal mit akustischer Behandlung nach Anspruch 2, **dadurch gekennzeichnet, dass** der vorbestimmte Winkel gleich 45 Grad ist.

4. Gasausstoßkanal mit akustischer Behandlung nach einem der Ansprüche 2 bis 3, **dadurch gekennzeichnet, dass** jede Tangente (401) zu einer der Häute (35, 40), die in einer Ebene senkrecht (400) zu der horizontalen Ebene (300) angeordnet ist, eine besagte Neigung (303) aufweist.

5. Gasausstoßkanal mit akustischer Behandlung nach einem der Ansprüche 1 bis 4, **dadurch gekennzeichnet, dass** die Hohlräume (61) eines Gitters (60) in der Höhe (Z) übereinander und quer (Y) nebeneinander angeordnet sind.

6. Gasausstoßkanal mit akustischer Behandlung nach einem der Ansprüche 1 bis 5, **dadurch gekennzeichnet, dass** jede der Trennwände (62) rechteckig ist.

7. Gasausstoßkanal mit akustischer Behandlung nach einem der Ansprüche 1 bis 6, **dadurch gekennzeichnet, dass** die akustische Wand (30) aus dem Werkstoff NiCr19Fe19Nb5Mo3 besteht.

8. Gasausstoßkanal mit akustischer Behandlung nach einem der Ansprüche 1 bis 7, **dadurch gekennzeichnet, dass** von innerer (40) und äußerer Haut (35) mindestens eine eine Dicke (ep) von weniger als einem Millimeter aufweist.

9. Gasausstoßkanal mit akustischer Behandlung nach einem der Ansprüche 1 bis 8, **dadurch gekennzeichnet, dass** jeder Durchbruch (41) einen Durchmesser (42) von weniger als oder gleich vier Millimetern aufweist.

10. Gasausstoßkanal mit akustischer Behandlung nach einem der Ansprüche 1 bis 9, **dadurch gekennzeichnet, dass** jeder Hohlraum (61) mit mindestens vier Durchbrüchen (41) mit einem maximalen Durchmesser (42) von 1,5 Millimetern kommuniziert.

11. Gasausstoßkanal mit akustischer Behandlung nach einem der Ansprüche 1 bis 10, **dadurch gekennzeichnet, dass** der Gasausstoßkanal (8) mit akustischer Behandlung eine Düse (10) ist, und dass jedes mechanische Element (11) aus einer Liste auszuwählen ist, die eine Schürze (20), einen zentralen Konus (15) und einen Arm (25) umfasst, der die Schürze (20) mit dem zentralen Konus (15) verbindet.

12. Gasausstoßkanal mit akustischer Behandlung nach einem der Ansprüche 1 bis 11, **dadurch gekennzeichnet, dass** der Gasausstoßkanal (8) mit akustischer Behandlung mindestens eine mit mindestens einer Entwässerungsöffnung (71) versehene Haut umfasst.

13. Fluggerät (1), das mit einem Gasausstoßkanal (8) mit akustischer Behandlung versehen ist, **dadurch gekennzeichnet, dass** der Gasausstoßkanal (8) mit akustischer Behandlung nach einem der Ansprüche 1 bis 12 ist.

14. Verfahren zum Fertigen eines Gasausstoßkanals (8) mit akustischer Behandlung nach einem der Ansprüche 1 bis 12, bei dem der Gasausstoßkanal (8) mit akustischer Behandlung durch Ausführen eines Lasersinterverfahrens gefertigt wird, wobei der Gasausstoßkanal (8) mit akustischer Behandlung Schicht für Schicht durch Wiederholen der folgenden Schritte gefertigt wird:
- Aufbringen einer Materialschicht durch eine Rolle (104),
- lokales Konsolidieren der Schicht,
- Absenken einer Unterlage (110), die den Gasausstoßkanal (8) mit akustischer Behandlung während der Fertigung trägt.

## Claims

1. Acoustically treated gas ejection pipe (8), provided with at least one mechanical member (11), said mechanical member (11) having at least one wall referred to as the "acoustic wall (30)" which is intended for being in contact with said gas (200), said acoustic wall (30) comprising an inner skin (40) and an outer skin (35) which are separated at least in part by a space (50), said acoustic wall (30) comprising at least one internal mesh (60) arranged in said space (50), said mesh (60) defining a plurality of cavities (61), each cavity (61) extending in the thickness direction from the inner skin (40) to the outer skin (35), said inner skin (40) being intended for being in contact with said gas (200), said inner skin (40) comprising perforations (41), each cavity (61) being in communication with at least one perforation (41), each cavity (61) having a parallelepiped shape, each cavity (61) being delimited in the elevation direction by a partition (62) referred to as the "top partition (63)" and a partition (62) referred to as the "bottom partition (64)", each cavity (61) being transversely delimited by a partition (62) referred to as the "left side partition (65)" and a partition (62) referred to as the "right side partition (66)", which each extend in the elevation direction from the bottom partition (64) to the top partition (63), each cavity (61) being transversely delimited in the thickness direction by a non-perforated portion (67) of the outer skin (35) and a perforated portion (68) of the inner skin (40), at least one of said partitions (62) of a cavity (61) having a drainage opening (70) which extends out of said cavity (61), **characterised in that** each cavity (61) has a non-rectangular parallelepiped shape, the bottom partition (64) and the top partition (63) each being at an acute angle (304), other than 90 degrees, to the left side partition (65) or the right side partition (66).

2. Acoustically treated gas ejection pipe according to claim 1, **characterised in that** said acoustically treated gas ejection pipe (8) extending in the elevation direction from a base (23) to a top (24), the inner skin (40), the outer skin (35) and each mesh (60) extending in elevation with respect to a production plane referred to as the "horizontal plane (300)" which is tangential to the base (23), each mesh (60) extending in elevation in a direction referred to as the "production direction (301)" which is at an acute angle (302) to said horizontal plane (300) of greater than or equal to a predetermined angle, the inner skin (40) and the outer skin (35) each have an acute angle (303) of inclination with respect to said horizontal plane (300) of greater than or equal to said predetermined angle.

3. Acoustically treated gas ejection pipe according to claim 2, **characterised in that** said predetermined angle is 45 degrees.

4. Acoustically treated gas ejection pipe according to either claim 2 or claim 3, **characterised in that** each tangent (401) to one of said skins (35, 40) that is arranged in a plane (400) perpendicular to said horizontal plane (300) has said inclination (303).

5. Acoustically treated gas ejection pipe according to any of claims 1 to 4, **characterised in that** said cavities (61) of a mesh (60) are arranged in elevation (Z) one above the other, and transversely (Y) one next to the other.

6. Acoustically treated gas ejection pipe according to any of claims 1 to 5, **characterised in that** each of said partitions (62) is rectangular.

7. Acoustically treated gas ejection pipe according to any of claims 1 to 6, **characterised in that** said acoustic wall (30) is made from the material NiCr19Fe19Nb5Mo3.

8. Acoustically treated gas ejection pipe according to any of claims 1 to 7, **characterised in that** at least one of said inner skin (40) and outer skin (35) has a thickness (ep) of less than one millimetre.

9. Acoustically treated gas ejection pipe according to any of claims 1 to 8, **characterised in that** each perforation (41) has a diameter (42) of less than or equal to four millimetres.

10. Acoustically treated gas ejection pipe according to any of claims 1 to 9, **characterised in that** each cavity (61) is in communication with at least four perforations (41) having a diameter (42) of at most 1.5 millimetres.

11. Acoustically treated gas ejection pipe according to any of claims 1 to 10, **characterised in that**, said acoustically treated gas ejection pipe (8) being a nozzle (10), each mechanical member (11) can be selected from a list including a skirt (20), a central cone (15) and an arm (25) which connects said skirt (20) to the central cone (15).

12. Acoustically treated gas ejection pipe according to any of claims 1 to 11, **characterised in that** said acoustically treated gas ejection pipe (10) comprises at least one skin provided with at least one drainage opening (71).

13. Aircraft (1) provided with an acoustically treated gas ejection pipe (8), **characterised in that** said acoustically treated gas ejection pipe (8) is a pipe according to any of claims 1 to 12.

14. Method for producing an acoustically treated gas ejection pipe (8) according to any of claims 1 to 12, during which said acoustically treated gas ejection pipe (8) is produced by carrying out a laser sintering process, said acoustically treated gas ejection pipe (8) being produced layer by layer by repeating the following steps:
- depositing a material layer by means of a roller (104),
- locally strengthening said layer,
- lowering a tray (110) supporting the acoustically treated gas ejection pipe (8) that is being produced.
